# FASCICULE DE BREVET EUROPEEN

(11) **EP 3 105 018 B1**
(45) Date de publication et mention de la délivrance du brevet: **13.06.2018**
(21) Numéro de dépôt: 15701009.1
(22) Date de dépôt: 22.01.2015
(51) Int. Cl.: B25J 15/00, B25J 15/10

(54) **ACTIONNEMENT D'UNE MAIN DESTINÉE À ÉQUIPER UN ROBOT À CARACTÈRE HUMANOÏDE**
BETÄTIGUNG EINER HAND ZUR VERWENDUNG AN EINEM HUMANOIDEN ROBOTER
ACTUATION OF A HAND INTENDED FOR BEING PROVIDED ON A HUMANOID ROBOT

(30) Priorité: 22.01.2014 FR 1450531
(43) Date de publication de la demande: 21.12.2016
(73) Titulaire: Softbank Robotics Europe, 75015 Paris (FR)
(72) Inventeur: LAVILLE, Jérémy, F-75015 Paris (FR); CLERC, Vincent, F-92140 Clamart (FR); MAISONNIER, Bruno, F-75014 Paris (FR)
(74) Mandataire: Collet, Alain
(86) Numéro de dépôt international: PCT/EP2015/051235
(87) Numéro de publication internationale: WO 2015/110521

(56) Documents cités:
- EP-A1- 1 457 294
- WO-A1-2013/185231
- WO-A2-2010/018358
- CN-U- 203 236 487
- FR-A1- 2 792 865
- JP-A- 2003 145 474
- US-A1- 2004 054 424
- US-A1- 2006 129 248

## Description

L'invention concerne une main destinée à équiper un robot à caractère humanoïde.

La main humaine est une partie du corps humain extrêmement complexe. Elle comprend plusieurs doigts articulés autour de la paume de la main. Par ailleurs chaque doigt possède plusieurs phalanges articulées entre elles. Chaque articulation est mobile au moyen de muscles. Les différentes articulations de la main permettent notamment la préhension d'objets de formes diverses. De nombreuses tentatives ont été réalisées dans des robots à caractère humanoïde afin de se rapprocher au mieux des fonctionnalités humaines. La fonction préhension est l'une des fonctions les plus difficiles à réaliser par un système robotisé, elle nécessite un grand nombre d'actionneurs indépendants pour assurer la préhension d'objets divers. Ceci augmente la complexité du robot tant au niveau du nombre d'actionneurs indépendants à prévoir qu'au niveau du pilotage de ces différents actionneurs que l'on doit commander de façon coordonnée.

Les documents WO 2010/018358 A2, CN 203 236 487 U, JP 2003 145474 A et US 2004/054424 A1 décrivent des mains robotisées dans lesquelles plusieurs doigts sont actionnés par un même actionneur.

L'invention vise à proposer une main d'un robot à caractère humanoïde possédant plusieurs doigts et permettant de s'adapter facilement à la forme de divers objets en réduisant le nombre d'actionneurs indépendants pour chacun des doigts de la main.

A cet effet, l'invention a pour objet une main destinée à équiper un robot à caractère humanoïde, la main comprenant une paume et plusieurs doigts motorisés par rapport à la paume, un actionneur commun à plusieurs doigts et un palonnier permettant de répartir un effort exercé par l'actionneur vers les doigts. De plus, l'invention se caractérise en ce qu'on définit dans un plan dit plan frontal perpendiculaire à une direction dans laquelle est orienté l'effort exercé par l'actionneur, la projection du point d'application sur le palonnier de l'effort exercé par l'actionneur et les projections des points d'application sur le palonnier des efforts exercés par les doigts. On définit dans le plan frontal une direction dite direction verticale perpendiculaire à l'intersection du plan frontal et d'un plan dit plan horizontal contenant une direction dans laquelle est orienté l'effort exercé par l'actionneur et dans lequel s'étend principalement la paume de la main. Selon la direction verticale, la projection du point d'application sur le palonnier de l'effort exercé par l'actionneur est disposée sensiblement au barycentre des projections des points d'application sur le palonnier des efforts exercés par les doigts, les projections des points d'application sur le palonnier des efforts exercés par les doigts n'étant pas toutes confondues.

Le terme palonnier est souvent utilisé dans le domaine aéronautique. Par analogie, on entend par palonnier toute pièce mécanique permettant de répartir des efforts. La répartition se fait en fonction de la disposition géométrique des points d'appuis de chacun des efforts sur la pièce mécanique. La répartition conserve un état d'équilibre de la pièce mécanique. Lorsque les efforts appliqués à la pièce mécanique évoluent lentement, il est possible de déterminer les différents efforts à partir d'équations d'équilibre statique. Dans l'invention, le palonnier permet de répartir l'effort d'un actionneur unique vers plusieurs doigts. La présence d'un palonnier permet d'améliorer la compliance de la main vis-à-vis de la forme des objets qu'elle est susceptible de rencontrer. On entend par compliance de la main, sa capacité à s'ajuster aux contraintes et aux forces qui s'exercent sur elle.

La mise en oeuvre d'un palonnier permet à la main de se refermer en reproduisant un mouvement fluide et naturel proche de celui d'un humain. Le fait d'associer un seul actionneur à un palonnier permet de synchroniser parfaitement le mouvement des différents doigts reliés au palonnier.

L'invention a également pour objet un robot à caractère humanoïde comprenant une main selon l'invention.

On entend par robot à caractère humanoïde, un robot présentant des similitudes avec le corps humain. Il peut s'agir du haut du corps, ou uniquement d'un bras articulé se terminant par une pince assimilable à une main humaine. Dans la présente invention, le fonctionnement de la main du robot est similaire à celui d'une main humaine. Une main conforme à l'invention permet de saisir des objets grâce aux mouvements de ses doigts et aux efforts qu'ils peuvent exercer sur un objet.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective une main destinée à équiper un robot à caractère humanoïde ;
les figures 2a, 2b et 2c représentent un palonnier de la main dans différentes vues en plan ;
les figures 3a, 3b et 3c représentent la main saisissant un objet ;
la figure 4 représente la main saisissant un autre objet ;
les figures 5, 6 et 7 représentent en perspective plusieurs variantes de la main ;
la figure 8 représente la main ouverte vue coté paume ;

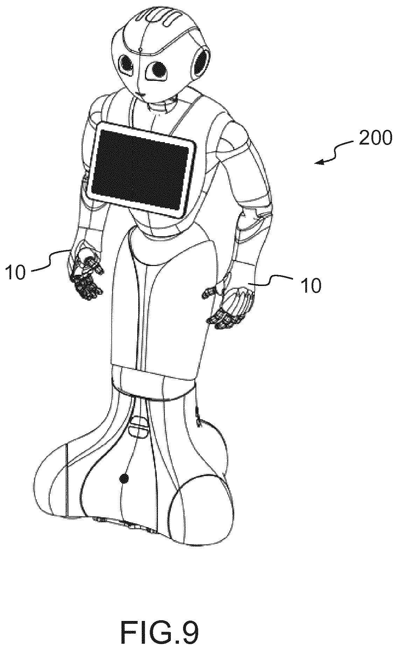

la figure 9 représente un robot à caractère humanoïde mettant en oeuvre la main de l'invention.

Par souci de clarté, les mêmes éléments porteront les mêmes repères dans les différentes figures.

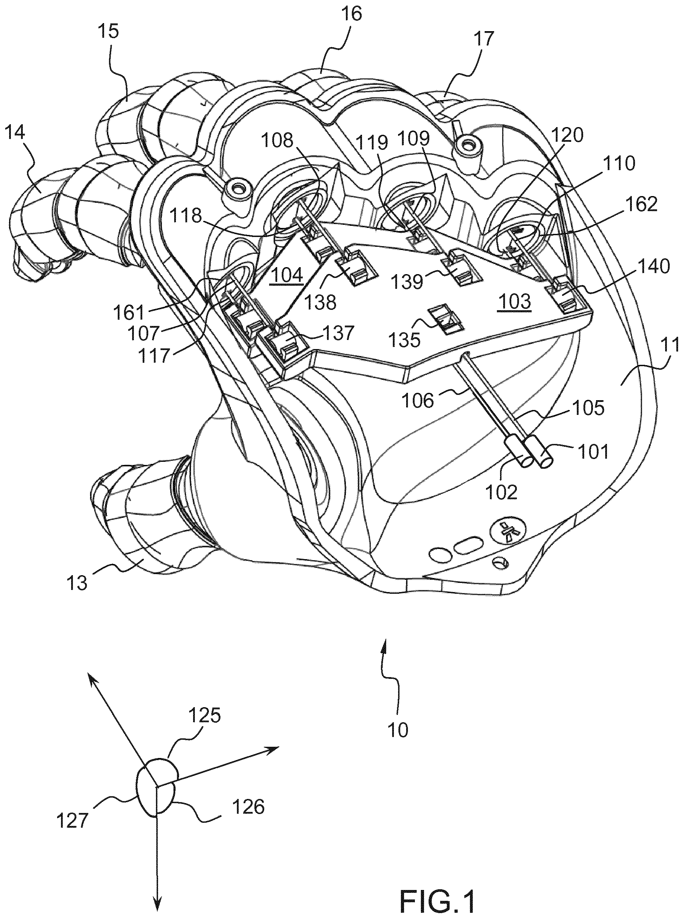

La figure 1 représente une main 10 destinée à équiper un robot à caractère humanoïde. La main 10 comprend une paume 11 et cinq doigts 13 à 17. Les doigts sont articulés à la paume 11 de façon à permettre la préhension d'objets entre les doigts 13 à 17. A l'image d'une main humaine, le doigt 13 est un pouce. Un objet saisi par la main est maintenu entre le pouce 13 et les autres doigts 14 à 17. L'invention n'est pas limitée à une main possédant cinq doigts. Il est possible de réduire le nombre de doigts pour simplifier la conception de la main ou même d'augmenter le nombre de doigts pour permettre la préhension d'objets particuliers.

De façon plus générale, une main de l'invention peut être formée d'une pince permettant de saisir un objet. La pince comprend au moins deux doigts articulés permettant plusieurs points de contact avec l'objet saisi. En regard de ces doigts articulés, il est possible de disposer un doigt fixe ou même directement la paume de la main.

Selon l'invention, la main 10 comprend un actionneur commun à plusieurs doigts et un palonnier permettant de répartir un effort exercé par l'actionneur vers les doigts. Dans l'exemple représenté figure 1, la main 10 comprend deux actionneurs 101 et 102 ainsi que deux palonniers 103 et 104. L'actionneur 101 est relié au palonnier 103 au moyen d'un tirant 105 et l'actionneur 102 est relié au palonnier 104 au moyen d'un tirant 106. Le palonnier 103 peut exercer un effort sur les quatre doigts 14 à 17 respectivement par l'intermédiaire de tirants 107, 108, 109 et 110. De même, le palonnier 104 peut exercer un effort sur les quatre doigts 14 à 17 respectivement par l'intermédiaire de tirants 117, 118, 119 et 120.

Les actionneurs 101 et 102 peuvent être des actionneurs linéaires tels que des vérins. Tout autre type d'actionneur peut être mis en oeuvre dans le cadre de l'invention, comme par exemple des actionneurs rotatifs ou des muscles artificiels.

Dans l'exemple représenté figure 1, les palonniers 103 et 104 permettent de répartir un effort vers quatre doigts représentant l'index 14, le majeur 15, l'annulaire 16 et l'auriculaire 17. Il est également possible d'inclure le pouce 13 dans la répartition. De façon plus générale le ou les palonniers 103 et 104 permettent de répartir un effort exercé par le ou les actionneurs 101 et 102 vers le pouce 13 et au moins un autre doigt 14 à 17.

Les deux palonniers 103 et 104 s'étendent principalement chacun dans un plan dit plan horizontal contenant une direction dans laquelle est orienté l'effort exercé par l'actionneur associé et dans lequel s'étend principalement la paume de la main 10.

Un doigt peut être actionné par deux tirants, par exemple les tirants 107 et 117 pour l'index 14, l'un pour tendre le doigt 14 et l'autre pour le replier. Les deux tirants 107 et 117 agissent alors de manière coordonnée. Les actionneurs 101 et 102 agissent également de manière coordonnée. On peut utiliser un actionneur unique qui tire sur l'un des tirants 105 ou 106 et pousse sur l'autre simultanément. La main 10 comprend deux palonniers 103 et 104 permettant de motoriser chacun des doigts 14, 15, 16 et 17. Le palonnier 103 permet de tendre les doigts qui lui sont raccordés et donc ouvrir la main 10. Le palonnier 104 permet de replier les doigts qui lui sont raccordés et donc fermer la main 10.

On définit un repère lié la paume 11 de la main 10. La paume s'étend principalement dans un plan 125 dit plan horizontal. Lorsque les doigts 14 à 17 sont complètement dépliés ou ouverts, ils s'étendent dans le plan 125. Dans la configuration représentée sur la figure 1, les palonniers 103 et 104 s'étendent principalement dans le plan horizontal 125. Les tirants 105 et 106 s'étendent également dans le plan horizontal 125. En conséquence, les directions dans lesquelles les efforts sont exercés par les actionneurs 101 et 102 sont contenues dans le plan 125.

On définit un plan frontal 126 perpendiculaire au plan horizontal 125 et aux directions dans lesquelles sont orientés les efforts exercés par les actionneurs 101 et 102.

On définit enfin un troisième plan 127 dit plan vertical perpendiculaire aux plans 125 et 126. Lorsque les doigts 14 à 17 se referment ou s'étendent, les phalanges se déplacent essentiellement dans un plan vertical.

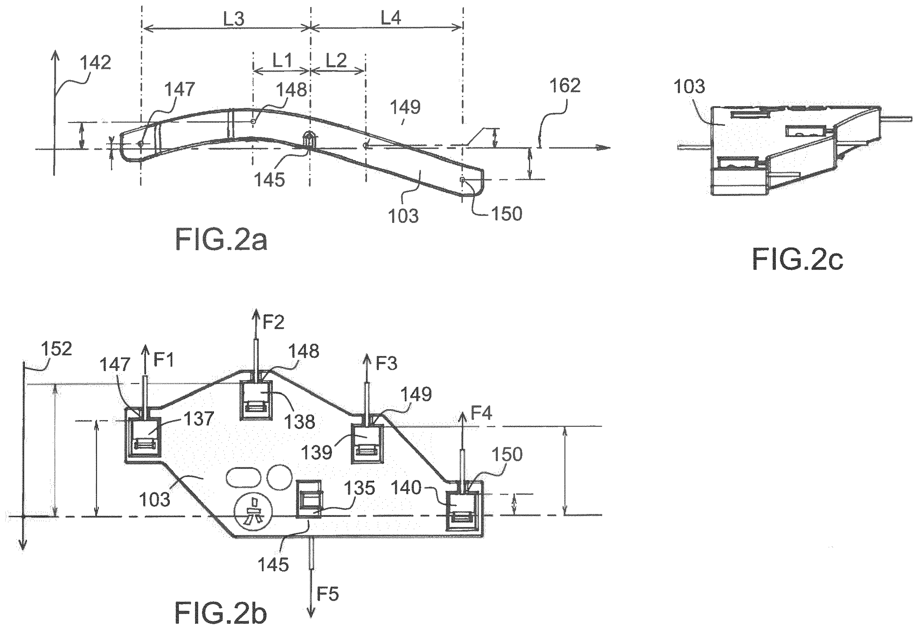

La figure 2a représente un des palonniers, par exemple le palonnier 103 en projection dans un plan frontal.

La figure 2b représente le même palonnier 103 en projection dans un plan horizontal et la figure 2c représente le palonnier 103 dans un plan vertical.

Le palonnier 103 s'étend principalement dans un plan horizontal. Il peut néanmoins présenter une certaine courbe par rapport à ce plan. Cette courbe est bien visible sur la figure 2a. Sur cette figure apparaissent les projections, dans le plan frontal, des points d'application des différents efforts sur le palonnier 103. Plus précisément, les tirants 105, 107, 108, 109 et 110 peuvent être des câbles dont les extrémités présentent des excroissances, respectivement 135, 137, 138, 139 et 140 serties ou moulées sur une extrémité du câble. Les excroissances de chacun des câbles sont maintenues dans des gorges réalisées dans le palonnier 103. Les points d'application des efforts sont les points de contact des excroissances avec le palonnier 103. L'effort exercé par l'actionneur 101 sur le palonnier 103 est repéré F5. Les efforts exercés par les doigts 14, 15, 16 et 17 sont repérés respectivement F1, F2, F3 et F4. Le point d'application de l'effort exercé par l'actionneur 101 par l'intermédiaire du tirant 105 porte le repère 145. Le point d'application de l'effort exercé par le tirant 107 porte le repère 147. Le point d'application de l'effort exercé par le tirant 108 porte le repère 148. Le point d'application de l'effort exercé par le tirant 109 porte le repère 149 et le point d'application de l'effort exercé par le tirant 110 porte le repère 150.

Dans le plan frontal 126, on définit une direction verticale 142 perpendiculaire à l'intersection du plan frontal 126 et du plan horizontal 125. La projection du point d'application 145 de l'effort exercé par l'actionneur 101 est avantageusement disposée sensiblement au barycentre des projections des points d'application 137 à 140 des efforts exercés par les doigts 14 à 17.

Plus précisément, sur la direction verticale 142, on définit comme origine l'abscisse de la projection du point d'application 145. La somme des abscisses des projections des points d'application 147 à 150 est nulle. Les projections sur la direction verticale 142 des points d'application 147 à 150 sur le palonnier 103 des efforts F1 à F4 exercés par les doigts 14 à 17 ne sont pas toutes confondues.

Cette position relative des différents points d'application des efforts F1 à F5 sur le palonnier 103 permet de conserver une position stable du palonnier 103 dans la paume 11 de la main 10. En effet, les efforts F1 à F4 exercés par les doigts sur le palonnier 103 peuvent évoluer en fonction de la forme d'un objet saisi par la main 10. La position relative des différents points d'application des efforts F1 à F5 sur le palonnier 103 ainsi définie permet de maintenir le palonnier 103 dans une position relative par rapport au plan horizontal 125 sensiblement constante. Le palonnier 103 peut se déplacer en translation selon une direction sensiblement portée par le plan horizontal 125.

Par ailleurs, on définit une direction frontale 152, visible sur la figure 2b. La direction 152 est parallèle à la direction dans laquelle est orienté l'effort F5 exercé par l'actionneur 101. Selon la direction frontale 152, on considère la projection du point d'application 145 sur le palonnier 103 de l'effort F5 exercé par l'actionneur 101 comme origine, et comme sens positif le sens dans lequel l'actionneur 101 tire sur le palonnier 103. Les abscisses des projections des points d'application 147 à 150 sur le palonnier 103 des efforts F1 à F4 exercés par les doigts 14 à 17 sont toutes négatives.

Cette position relative des différents points d'application des efforts F1 à F5 sur le palonnier 103 permet d'éviter tout arc-boutement du palonnier 103 dans la paume 11 de la main 10.

On peut enfin définir une troisième direction 162 perpendiculaire aux directions 142 et 152. Selon la direction 162, la projection du point d'application 145 de l'effort exercé par l'actionneur 101 est avantageusement disposée sensiblement au milieu des projections des points d'application 148 et 149. De même, toujours selon la direction 162, la projection du point d'application 145 est avantageusement disposée sensiblement au milieu des projections des points d'application 147 et 150. Autrement dit, selon la direction 162, on définit plusieurs distances séparant la projection du point d'application 145 des autres projections : L1 pour la projection du point 148, L2 pour la projection du point 149, L3 pour la projection du point 147 et L4 pour la projection du point 150. Avantageusement, on a L1 = L2 et L3 = L4.

Le respect de la position du point d'application 145 au milieu des doigts deux à deux permet de répartir de façon équilibrée les efforts de l'actionneur 101 vers les différents doigts 14 à 17. Autrement dit pour une traction donnée réalisée par l'actionneur 101, l'effort exercé sur chacun des quatre doigts 14 à 17 est égal au quart de l'effort exercé par l'actionneur 101.

Il est possible de généraliser cette disposition quelque soit le nombre de doigts raccordés au palonnier 103. Plus précisément, selon la direction 162, la projection du point d'application 145 de l'effort exercé par l'actionneur 101 est située au barycentre de la projection des points d'application des efforts exercés par les doigts 14 à 17 reliés au palonnier 103.

Une répartition équilibrée des efforts sur les différents doigts reliés au palonnier permet d'adopter une préhension des objets saisis proche d'une préhension humaine quelle que soit leur forme, même en présence d'un seul actionneur 101.

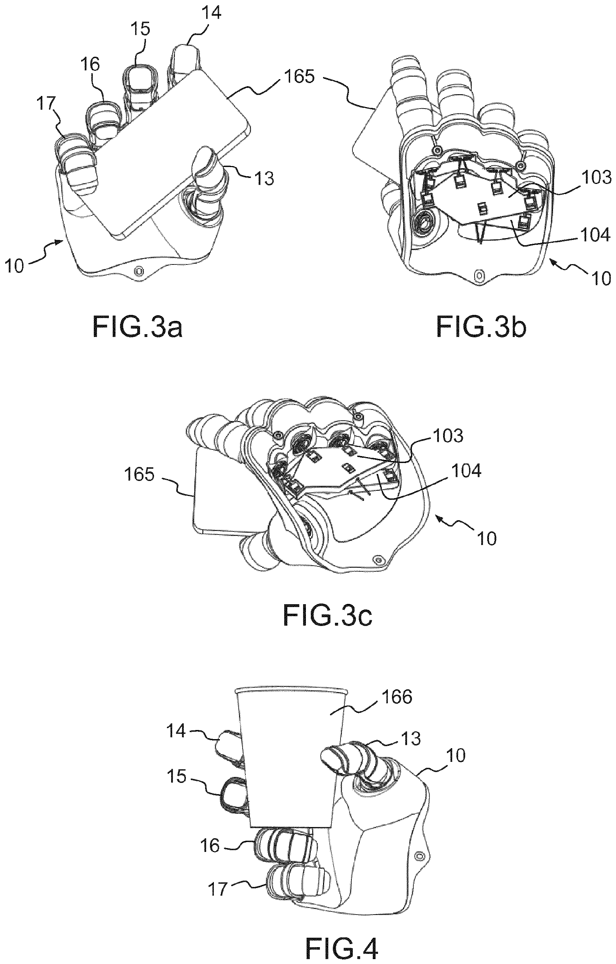

Les figures 3a, 3b et 3c représentent la main 10 saisissant un objet 165 de forme rectangulaire, comme par exemple un téléphone portable. Les cinq doigts 13 à 17 sont en contact avec l'objet 165. La forme de l'objet 165 nécessite un repliement différent pour chacun des doigts 14 à 17 reliés aux palonniers 103 et 104. Plus précisément, l'index 14 est faiblement replié et à l'opposé, l'auriculaire 17 est fortement replié. Sur la figure 1, en l'absence d'objet saisi, les doigts 14 à 17 reliés aux palonniers 103 et 104 sont sensiblement repliés de la même façon. La présence de l'objet 165 modifie le repliement des doigts 14 à 17 tout en conservant un effort sensiblement constant exercé par chacun des doigts 14 à 17 sur l'objet 165.

Une rotation s'est opérée entre les palonniers 103 et 104 pour s'adapter à l'objet 165. Cette rotation est visible entre d'une part la figure 1, en l'absence d'objet saisi, et d'autre part les figures 3a à 3c en présence de l'objet 165. La présence d'un ou de deux palonniers permet à la main de s'adapter à la forme de l'objet saisi.

La figure 4 représente la main 10 saisissant un objet 166 de forme circulaire, comme par exemple un gobelet. L'objet 166 est uniquement tenu par trois doigts sur cinq. L'objet 166 est tenu entre d'une part le pouce 13 et d'autre part l'index 14 et le majeur 15. Grâce aux palonniers 103 et 104, les deux autres doigts 16 et 17 se replient complètement jusqu'à venir en butée par exemple contre la paume de la main 10. L'égalité des efforts exercés par les doigts 14 à 17 n'est pas parfaite dans le cas d'un objet tel que le gobelet 166. Néanmoins, les efforts des différents doigts 14 à 17 sont plus équilibrés qu'en l'absence de palonnier.

De façon générale la mise en oeuvre d'un palonnier permet de répartir l'effort exercé par l'actionneur associé à ce palonnier sur les différents doigts. Ainsi les différents doigts peuvent exercer un effort sensiblement constant sur un objet saisi par la main même si la forme de l'objet est variable.

Alternativement, il est possible de s'éloigner de l'équilibre obtenu en positionnant le point d'application 145 de l'actionneur 101 au barycentre des points d'application 147 à 150 des tirants reliés aux doigts 14 à 17. On peut par exemple déplacer le point d'application 145 vers l'index 14 et ainsi distribuer plus d'efforts vers l'index 14. L'index 14 aura tendance à se refermer en avance par rapport aux autres doigts. L'index 14 exerce alors un effort plus important que les autres doigts sur l'objet saisi.

A l'extrême il est possible d'aligner le point d'application 147 de l'index de la main 10 avec le point d'application 145 de l'actionneur 101. Ceci permet d'assurer une préhension d'un objet uniquement entre le pouce 13 et l'index 14.

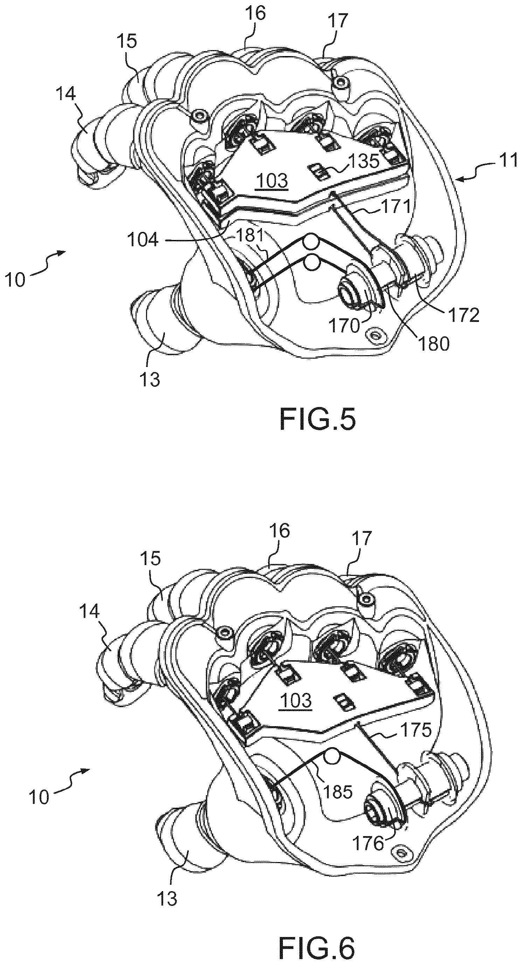

La figure 5 représente une variante de la main 10 dans laquelle un actionneur double effet 170 agit sur les deux palonniers 103 et 104. Les deux tirants 105 et 106 représentés dans la variante de la figure 1 sont remplacés par un câble 171 possédant deux extrémités fixées chacune à l'un des palonniers 103 et 104. Plus précisément une extrémité du câble est formée par l'excroissance 135. L'autre extrémité du câble 171, non visible sur la figure 5, est semblable et est fixée au palonnier 104. L'actionneur 170 est commun aux deux palonniers 103 et 104. L'actionneur 170 est par exemple un actionneur rotatif qui entraine en rotation une poulie 172. Le câble 171 s'enroule sur la poulie 172. La rotation de la poulie 172 déplace le câble 171 qui tire sur l'un des palonniers 103 et 104 et pousse sur l'autre.

Lorsque les deux palonniers 103 et 104 sont sensiblement parallèles, le câble 171 est en contact avec la poulie 172 sur environ la moitié du diamètre de la poulie 172. L'enroulement du câble 171 sur la poulie 172 permet de transmettre un couple fonction de la longueur de câble 171 en contact avec la poulie 172. Le couple transmis est également fonction du coefficient de frottement du câble 171 par rapport à la poulie 172 et donc de la nature des matériaux en contact choisis pour le câble 171 et pour la poulie 172. Il est possible de définir ces matériaux pour réaliser un limiteur de couple et donc un limiteur d'effort sur les doigts 14 à 17. Par exemple si un effort extérieur important est appliqué aux doigts 14 à 17, on peut permettre au câble 171 de glisser par rapport à la poulie 172 notamment pour protéger l'actionneur 170.

Alternativement, on peut souhaiter éviter tout glissement du câble 171 par rapport à la poulie 172, notamment si l'actionneur 170 est muni d'un capteur de position permettant de déterminer la position des doigts 14 à 17. Pour éviter tout glissement, on peut par exemple enrouler le câble 171 sur plus d'un tour autour de la poulie 171. Il est également possible de fixer le câble 171 à la poulie.

La figure 6 représente une autre variante de la main 10 ne possédant qu'un seul palonnier 103 actionné par un câble 175 et un actionneur 176 double effet. Chaque doigt 14 à 17 comprend un élément élastique, comme par exemple un ressort tendant à maintenir les doigts 14 à 17 dans une position extrême, soit repliée soit en extension. Par l'intermédiaire du palonnier 103, l'actionneur 176 permet à chacun des doigts de s'éloigner de sa position extrême. Par exemple, les doigts 14 à 17 maintenus en position d'extension par un ressort sont repliés au moyen de l'actionneur 176.

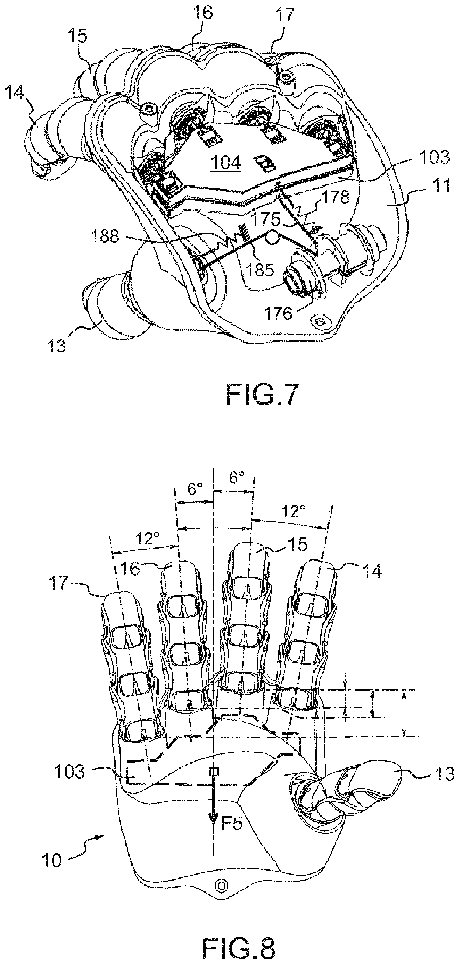

La figure 7 présente une variante de la figure 6 dans laquelle le ressort de rappel est commun à tous les doigts 14 à 17. On retrouve dans cette variante les deux palonniers 103 et 104. Comme dans la variante de la figure 6, le palonnier 103 est relié à l'actionneur 176 par l'intermédiaire du câble 175. De plus le palonnier 104 est relié au corps de la paume 11 par l'intermédiaire d'un ressort 178. Ainsi lorsque l'actionneur 176 tire sur le palonnier 103, un effort de rappel commun aux doigts 14 à 17 est appliqué grâce au palonnier 104. L'effort de rappel est réparti sur les doigts 14 à 17 par le palonnier 104.

Une autre configuration consiste à utiliser les deux palonniers 103 et 104 pour agir chacun sur des phalanges différentes des doigts 14 à 17. Les deux actionneurs 101 et 102 sont alors indépendants.

Dans les variantes représentées sur les figures 5, 6 et 7, l'actionneur 170 ou 176 exerce un effort sur le pouce 13 indépendamment du ou des palonniers 103 et 104.

A cet effet, dans la variante de la figure 5, l'actionneur 170 entraine en rotation une seconde poulie 180 sur laquelle s'enroule un câble 181 permettant de transmettre un effort au pouce 13. Comme le câble 171, le câble 181 permet de replier et d'étendre le pouce 13. On peut prévoir deux poulies libres 182 sur lesquelles s'appuie le câble 181 pour modifier sa direction entre l'actionneur 170 et le pouce 13. Les câbles 171 et 181 associés chacun à une poulie 172 et 180 sont configurés pour replier le pouce 13 et les autres doigts 14 à 17 lors d'une même rotation de l'actionneur 170. Une rotation inverse de l'actionneur 170 permet d'étendre le pouce 13 et les autres doigts 14 à 17. Ainsi un seul actionneur permet de refermer la main 10 ou de l'ouvrir sur objet saisi.

Cette configuration où le pouce 13 et les quatre autres doigts 14 à 17 sont commandés par le même actionneur est transposable dans les autres variantes des figures 6 et 7. Ainsi dans la variante de la figure 6, le pouce 13 est actionné par un câble 185 relié à l'actionneur 176 indépendamment du palonnier 103. Dans la variante de la figure 7, un effort de rappel est exercé sur le pouce 13 par l'intermédiaire d'un ressort 188. Cet effort de rappel s'oppose à l'effort exercé par le câble 185.

Avantageusement, la main 10 comprend des butées limitant le déplacement du ou des palonniers 103 et 104. Des butées 161 et 162 sont par exemple formées dans la paume 10 au niveau des doigts 14 et 17 Les palonniers 103 et 104 prennent appui contre l'une ou contre les deux butées 161 et 162 lorsque les tirants correspondant sont en bout de course. Plus précisément, le palonnier 104 vient en appui contre la butée 161 lorsque l'index 14 se tend au maximum souhaité. L'appui du palonnier 104 sur la butée 161 évite un retournement de l'index 14 au-delà de sa position tendue. Ce retournement serait semblable à une luxation d'une des articulations des phalanges en anatomie humaine. Autrement dit l'appui sur la butée permet de limiter le débattement angulaire des articulations du doigt considéré. L'appui du palonnier 104 contre la butée 162 permet, de la même façon, de limiter l'extension de l'auriculaire 17. Les deux butées 161 et 162 disposées au niveau des doigts extrêmes 14 et 17 suffisent pour limiter l'extension de tous les doigts associés au palonnier 104. De même, le palonnier 103 peut également venir en appui sur les butées 161 et 162 afin de limiter le repli des doigts 14 à 17.

la figure 8 représente la main ouverte vue coté paume. Cette vue permet de préciser la position des points d'applications des doigts reliés au palonnier et l'orientation des doigts entre eux. Plus précisément, à l'aide de la figure 2b, on a précisé que par rapport à la direction frontale 152, les abscisses des projections des points d'application 147 à 150 sur le palonnier 103 sont toutes négatives. L'origine des abscisses est la projection du point d'application 145 de l'effort appliqué par l'actionneur. Il est possible de mieux se rapprocher de l'anatomie humaine en différenciant les différentes abscisses des projections des points d'application 147 à 150 sur la direction frontale 152. Plus précisément, en valeur absolue, l'abscisse du point d'application 150 de l'effort F4 exercé par l'auriculaire 17 est la plus petite. En valeur absolue, l'abscisse du point d'application 148 de l'effort F2 exercé par le majeur 15 est la plus grande. En valeur absolue, les abscisses des points d'application 147 et 149 des efforts F1 et F3 exercés par l'index 14 et l'annulaire 16 ont des valeurs intermédiaires comprises entre l'abscisse des points d'application 148 et 150.

Avantageusement, les quatre doigts 14 à 17 reliés au palonnier sont identiques. Cela permet de simplifier leur fabrication en standardisant les pièces mécaniques qui les composent. Bien que les doigts de la main 10 soient identiques, ce qui n'est pas le cas dans une main humaine, le fait de décaler les points d'application 147 à 150 et donc l'accrochage des doigts sur la paume 11 permet à la main 10 de se rapprocher de l'anatomie humaine en ce qui concerne la disposition des extrémités des doigts 14 à 17.

Par ailleurs, il est possible d'orienter différemment dans le plan frontal les quatre doigts 14 à 17 de façon à ce que, lorsque les doigts se referment, les extrémités de chacun des doigts tendent à se rapprocher. Plus précisément, par rapport à la direction selon laquelle l'effort F5 est appliqué, les directions selon lesquelles s'étendent les doigts reliés au palonnier considéré, s'ouvrent angulairement d'autant plus que le point d'application du doigt considéré est éloigné de la direction selon laquelle l'effort F5 est appliqué. Par direction selon laquelle s'étend un doigt, on entend une direction principale du doigt lorsque celui-ci est en extension. Dans l'exemple représenté, le majeur et l'annulaire s'étendent selon des directions faisant chacune un angle d'environ 6° avec la direction selon laquelle l'effort F5 est appliqué. L'annulaire 16 et l'auriculaire 17 s'étendent selon des directions faisant entre elles un angle d'environ 12°. De même, l'index 14 et le majeur 15 s'étendent selon des directions faisant entre elles un angle d'environ 12°. En se refermant les extrémités des doigts se rapprochent, ce qui facilite la préhension entre les quatre doigts 14 à 17 et le pouce 13. Il est bien entendu que ces valeurs angulaires ne sont données qu'à titre d'exemple. D'autres valeurs sont bien entendu possibles.

La figure 8 représente un robot à caractère humanoïde 200 possédant deux mains 10.

## Revendications

1. Main destinée à équiper un robot à caractère humanoïde, la main (10) comprenant une paume (11) et plusieurs doigts (13, 14, 15, 16, 17) motorisés par rapport à la paume (11), un actionneur (101, 102 ; 170 ; 176) commun à plusieurs doigts (13, 14, 15, 16, 17) et un palonnier (103, 104) permettant de répartir un effort (F5) exercé par l'actionneur (101, 102) vers les doigts (14, 15, 16, 17),
**caractérisée en ce qu'**on définit dans un plan dit plan frontal (126) perpendiculaire à une direction dans laquelle est orienté l'effort exercé par l'actionneur (101, 102), la projection du point d'application (145) sur le palonnier (103) de l'effort (F5) exercé par l'actionneur (101) et les projections des points d'application (147, 148, 149, 150) sur le palonnier (103) des efforts (F1, F2, F3, F4) exercés par les doigts (14, 15, 16, 17), **en ce qu'**on définit dans le plan frontal (126) une direction dite direction verticale (142) perpendiculaire à l'intersection du plan frontal (126) et d'un plan dit plan horizontal (125) contenant une direction dans laquelle est orienté l'effort (F5) exercé par l'actionneur (101) et dans lequel s'étend principalement la paume (11) de la main (10) et **en ce que** selon la direction verticale (142), la projection du point d'application (145) sur le palonnier (103) de l'effort (F5) exercé par l'actionneur (101) est disposée sensiblement au barycentre des projections des points d'application (147, 148, 149, 150) sur le palonnier (103) des efforts (F1, F2, F3, F4) exercés par les doigts (14, 15, 16, 17), les projections des points d'application (147, 148, 149, 150) sur le palonnier (103) des efforts (F1, F2, F3, F4) exercés par les doigts (14, 15, 16, 17) n'étant pas toutes confondues.

2. Main selon la revendication 1, **caractérisée en ce qu'**on définit dans un plan dit plan horizontal (125) contenant une direction dans laquelle est orienté l'effort (F5) exercé par l'actionneur (101) et dans lequel s'étend principalement la paume (11) de la main (10), la projection du point d'application (145) sur le palonnier (103) de l'effort (F5) exercé par l'actionneur (101) et les projections des points d'application (147, 148, 149, 150) sur le palonnier (103) des efforts (F1, F2, F3, F4) exercés par les doigts (14, 15, 16, 17), **en ce qu'**on définit une direction dite direction frontale (152) parallèle à la direction dans laquelle est orienté l'effort (F5) exercé par l'actionneur (101), et **en ce que** selon la direction frontale (152), en considérant la projection du point d'application (145) sur le palonnier (103) de l'effort (F5) exercé par l'actionneur (101) comme origine, et comme sens positif le sens dans lequel l'actionneur (101) tire sur le palonnier (103), les abscisses des projections des points d'application (147, 148, 149, 150) sur le palonnier (103) des efforts (F1, F2, F3, F4) exercés par les doigts (14, 15, 16, 17) sont toutes négatives.

3. Main selon la revendication 2, **caractérisée en ce qu'**elle comprend quatre doigts (14, 15, 16, 17) reliés au palonnier (103, 104), dont un premier doigt forme un index (14), un deuxième forme un majeur (15) un troisième forme un annulaire (16) et un quatrième forme un auriculaire (17), **en ce que**, par rapport à la direction frontale (152) et en valeur absolue, l'abscisse du point d'application (150) de l'effort (F4) exercé par l'auriculaire (17) est la plus petite, l'abscisse du point d'application (148) de l'effort (F2) exercé par le majeur (15) est la plus grande et, les abscisses des points d'application (147, 149) des efforts (F1, F3) exercé par l'index (14) et l'annulaire (16) ont des valeurs intermédiaires.

4. Main selon la revendication 3, **caractérisée en ce que** les quatre doigts (14, 15, 16, 17) reliés au palonnier (103, 104) sont identiques.

5. Main selon l'une des revendications précédentes, **caractérisée en ce qu'**on définit dans un plan dit plan horizontal (125) contenant une direction dans laquelle est orienté l'effort (F5) exercé par l'actionneur (101) et dans lequel s'étend principalement la paume (11) de la main (10), la projection du point d'application (145) sur le palonnier (103) de l'effort (F5) exercé par l'actionneur (101) et les projections des points d'application (147, 148, 149, 150) sur le palonnier (103) des efforts (F1, F2, F3, F4) exercés par les doigts (14, 15, 16, 17), **en ce que** selon une direction (162) du plan horizontal (125) perpendiculaire à la direction dans laquelle est orienté l'effort (F5) exercé par l'actionneur (101), la projection du point d'application (145) de l'effort exercé par l'actionneur (101) est située au barycentre de la projection des points d'application des efforts (F1, F2, F3, F4) exercés par les doigts (14, 15, 16, 17) reliés au palonnier (103).

6. Main selon l'une des revendications précédentes, **caractérisée en ce que** le palonnier (103, 104) s'étend principalement dans un plan dit plan horizontal (125) contenant une direction dans laquelle est orienté l'effort (F5) exercé par l'actionneur (101) et dans lequel s'étend principalement la paume (11) de la main (10).

7. Main selon l'une des revendications précédentes, **caractérisée en ce que** l'actionneur est un actionneur double effet (176) et **en ce qu'**elle comprend un seul palonnier (103) relié à l'actionneur double effet (176).

8. Main selon l'une des revendications 1 à 6, **caractérisée en ce qu'**elle comprend deux palonniers (103, 104) permettant de motoriser chacun des doigts (14, 15, 16, 17) en double effet.

9. Main selon la revendication 8, **caractérisée en ce qu'**elle comprend un actionneur double effet (170) commun aux deux palonniers (103, 104).

10. Main selon la revendication 9, **caractérisée en ce que** l'actionneur commun (170) aux deux palonniers (103, 104) agit sur les deux palonniers (103, 104) par l'intermédiaire d'un câble (171) s'enroulant sur une poulie (172) entrainée en rotation par l'actionneur commun (170) aux deux palonniers (103, 104).

11. Main selon l'une des revendications précédentes, **caractérisée en ce qu'**elle comprend des butées (161, 162) limitant le déplacement du palonnier (103, 104).

12. Main selon l'une des revendications précédentes, **caractérisée en ce qu'**elle comprend un pouce (13) et **en ce que** l'actionneur (170 ; 176) exerce un effort sur le pouce (13) indépendamment du palonnier (103, 104).

13. Robot à caractère humanoïde **caractérisé en ce qu'**il comprend une main (10) selon l'une des revendications précédentes.

## Patentansprüche

1. Hand, bestimmt zum Ausstatten eines Roboters von humanoidem Charakter, wobei die Hand (10) Folgendes umfasst: eine Handfläche (11) und mehrere Finger (13, 14, 15, 16, 17), die mit Bezug auf die Handfläche (11) motorisiert sind, einen Aktuator (101, 102; 170; 176), der mehreren Fingern (13, 14, 15, 16, 17) gemeinsam ist, einen Ausgleichshebel (103, 104), der es zulässt, eine vom Aktuator (101, 102) ausgeübte Kraft (F5) zu den Fingern (14, 15, 16, 17) zu verteilen,
**dadurch gekennzeichnet, dass** in einer Ebene, Frontalebene (126) genannt, lotrecht zu einer Richtung, in der die vom Aktuator (101, 102) ausgeübte Kraft orientiert ist, die Projektion des Angriffspunkts (145) am Ausgleichshebel (103) der vom Aktuator (101) ausgeübten Kraft (F5) und die Projektionen der Angriffspunkte (147, 148, 149, 150) am Ausgleichshebel (103) der von den Fingern (14, 15, 16, 17) ausgeübten Kräfte (F1, F2, F3, F4) definiert sind, dadurch, dass in der Frontalebene (126) eine Richtung, vertikale Richtung (142) genannt, lotrecht zum Schnittpunkt der Frontalebene (126) und einer Ebene, Horizontalebene (125) genannt, die eine Richtung enthält, in der die vom Aktuator (101) ausgeübte Kraft (F5) orientiert ist und in der hauptsächlich die Handfläche (11) der Hand (10) verläuft, definiert wird, und dadurch, dass gemäß der Vertikalebene (142) die Projektion des Angriffspunkts (145) am Ausgleichshebel (103) der vom Aktuator (101) ausgeübten Kraft (F5) im Wesentlichen im Barizentrum der Projektionen der Angriffspunkte (147, 148, 149, 150) am Ausgleichshebel (103) der von den Fingern (14, 15, 16, 17) ausgeübten Kräfte (F1, F2, F3, F4) angeordnet sind, wobei die Projektionen der Angriffspunkte (147, 148, 149, 150) am Ausgleichshebel (103) der von den Fingern (14, 15, 16, 17) ausgeübten Kräfte (F1, F2, F3, F4) nicht alle übereinstimmen.

2. Hand nach Anspruch 1, **dadurch gekennzeichnet, dass** in einer Ebene, Horizontalebene (125) genannt, die eine Richtung enthält, in der die vom Aktuator (101) ausgeübte Kraft (F5) orientiert ist und in der hauptsächlich die Handfläche (11) der Hand (10) verläuft, die Projektion des Angriffspunkts (145) am Ausgleichshebel (103) der vom Aktuator (101) ausgeübten Kraft (F5) und die Projektionen der Angriffspunkte (147, 148, 149, 150) am Ausgleichshebel (103) der von den Fingern (14, 15, 16, 17) ausgeübten Kräfte (F1, F2, F3, F4) definiert sind, dadurch, dass eine Richtung, Frontalrichtung (152) genannt, parallel zu der Richtung, in der die vom Aktuator (101) ausgeübte Kraft (F5) orientiert ist, definiert wird, und dadurch, dass gemäß der Frontalrichtung (152), unter Berücksichtigung der Projektion des Angriffspunkts (145) am Ausgleichshebel (103) der vom Aktuator (101) als Ursprung ausgeübten Kraft (F5), und als positive Richtung die Richtung, in der der Aktuator (101) am Ausgleichshebel (103) zieht, alle Abszissen der Projektionen der Angriffspunkte (147, 148, 149, 150) am Ausgleichshebel (103) der von den Fingern (14, 15, 16, 17) ausgeübten Kräfte (F1, F2, F3, F4) negativ sind.

3. Hand nach Anspruch 2, **dadurch gekennzeichnet, dass** sie vier Finger (14, 15, 16, 17) umfasst, die mit dem Ausgleichshebel (103, 104) verbunden sind, wobei ein erster Finger einen Zeigefinger (14) bildet, ein zweiter Finger einen Mittelfinger (15) bildet, ein dritter Finger einen Ringfinger (16) bildet und ein vierter Finger einen kleinen Finger (17) bildet, dadurch, dass in Bezug auf die Frontalrichtung (152) und als Absolutwert die Abszisse des Angriffspunkts (150) der vom kleinen Finger (17) ausgeübten Kraft (F4) die kleinste ist, die Abszisse des Angriffspunkts (148) der vom Mittelfinger (15) ausgeübten Kraft (F2) die größte ist und die Abszissen der Angriffspunkte (147, 149) der vom Zeigefinger (14) und vom Ringfinger (16) ausgeübten Kräfte (F1, F3) Zwischenwerte haben.

4. Hand nach Anspruch 3, **dadurch gekennzeichnet, dass** die mit dem Ausgleichshebel (103, 104) verbundenen vier Finger (14, 15, 16, 17) identisch sind.

5. Hand nach einem der vorherigen Ansprüche, **dadurch gekennzeichnet, dass** in einer Ebene, Horizontalebene (125) genannt, die eine Richtung enthält, in der die vom Aktuator (101) ausgeübte Kraft (F5) orientiert ist und in der hauptsächlich die Handfläche (11) der Hand (10) verläuft, die Projektion des Angriffspunkts (145) am Ausgleichshebel (103) der vom Aktuator (101) ausgeübten Kraft (F5) und die Projektionen der Angriffspunkte (147, 148, 149, 150) am Ausgleichshebel (103) der von den Fingern (14, 15, 16, 17) ausgeübten Kräfte (F1, F2, F3, F4) definiert sind, dadurch, dass gemäß einer Richtung (162) der Horizontalebene (125) lotrecht zu der Richtung, in der die vom Aktuator (101) ausgeübte Kraft (F5) orientiert ist, die Projektion des Angriffspunkts (145) der vom Aktuator (101) ausgeübten Kraft sich im Barizentrum der Projektion der Angriffspunkte der von den mit dem Ausgleichshebel (103) verbundenen Fingern (14, 15, 16, 17) ausgeübten Kräfte (F1, F2, F3, F4) befindet.

6. Hand nach einem der vorherigen Ansprüche, **dadurch gekennzeichnet, dass** der Ausgleichshebel (103, 104) hauptsächlich in einer Ebene, Horizontalebene (125) genannt, verläuft, die eine Richtung enthält, in der die vom Aktuator (101) ausgeübte Kraft (F5) ausgerichtet ist und in der hauptsächlich die Handfläche (11) der Hand (10) verläuft.

7. Hand nach einem der vorherigen Ansprüche, **dadurch gekennzeichnet, dass** der Aktuator ein Doppeleffektaktuator (176) ist, und dadurch, dass sie einen einzigen mit dem Doppeleffektaktuator (176) verbundenen Ausgleichshebel (103) umfasst.

8. Hand nach einem der Ansprüche 1 bis 6, **dadurch gekennzeichnet, dass** sie zwei Ausgleichshebel (103, 104) umfasst, die es zulassen, jeweils die Finger (14, 15, 16, 17) im Doppeleffekt anzutreiben.

9. Hand nach Anspruch 8, **dadurch gekennzeichnet, dass** sie einen den beiden Ausgleichshebeln (103, 104) gemeinsamen Doppeleffektaktuator (170) umfasst.

10. Hand nach Anspruch 9, **dadurch gekennzeichnet, dass** der den beiden Ausgleichshebeln (103, 104) gemeinsame Aktuator (170) auf die beiden Ausgleichshebel (103, 104) mittels eines Kabels (171) wirkt, das sich auf eine Rolle (172) wickelt, die von dem den beiden Ausgleichshebeln (103, 104) gemeinsamen Aktuator (170) in Drehung versetzt wird.

11. Hand nach einem der vorherigen Ansprüche, **dadurch gekennzeichnet, dass** sie Anschläge (161, 162) umfasst, die die Bewegung des Ausgleichshebels (103, 104) begrenzen.

12. Hand nach einem der vorherigen Ansprüche, **dadurch gekennzeichnet, dass** sie einen Daumen (13) umfasst, und dadurch, dass der Aktuator (170; 176) eine Kraft auf den Daumen (13) unabhängig vom Ausgleichshebel (103, 104) ausübt.

13. Roboter mit humanoidem Charakter, **dadurch gekennzeichnet, dass** er eine Hand (10) nach einem der vorherigen Ansprüche umfasst.

## Claims

1. A hand intended for a humanoid robot, the hand (10) comprising a palm (11) and several fingers (13, 14, 15, 16, 17) that are motorized relative to the palm (11), an actuator (101, 102; 170; 176) common to several fingers (13, 14, 15, 16, 17) and a spreader (103, 104) making it possible to distribute a force (F5) exerted by the actuator (101, 102) toward the fingers (14, 15, 16, 17), **characterized in that** there are defined, in a plane called frontal plane (126) at right angles to a direction in which the force exerted by the actuator (101, 102) is oriented, the projection of the point of application (145) on the spreader (103) of the force (F5) exerted by the actuator (101) and the projections of the points of application (147, 148, 149, 150) on the spreader (103) of the forces (F1, F2, F3, F4) exerted by the fingers (14, 15, 16, 17), **in that** there is defined, in the frontal plane (126), a direction called vertical direction (142) at right angles to the intersection of the frontal plane (126) and of a plane called horizontal plane (125) containing a direction in which the force (F5) exerted by the actuator (101) is oriented and in which the palm (11) of the hand (10) mainly extends, and **in that**, according to the vertical direction (142), the projection of the point of application (145) on the spreader (103) of the force (F5) exerted by the actuator (101) is positioned substantially at the barycenter of the projections of the points of application (147, 148, 149, 150) on the spreader (103) of the forces (F1, F2, F3, F4) exerted by the fingers (14, 15, 16, 17), the projections of the points of application (147, 148, 149, 150) on the spreader (103) of the forces (F1, F2, F3, F4) exerted by the fingers (14, 15, 16, 17) not all coinciding.

2. The hand as claimed in claim 1, **characterized in that** there are defined, in a plane called horizontal plane (125) containing a direction in which the force (F5) exerted by the actuator (101) is oriented and in which the palm (11) of the hand (10) mainly extends, the projection of the point of application (145) on the spreader (103) of the force (F5) exerted by the actuator (101) and the projections of the points of application (147, 148, 149, 150) on the spreader (103) of the forces (F1, F2, F3, F4) exerted by the fingers (14, 15, 16, 17), **in that** there is defined a direction called frontal direction (152) parallel to the direction in which the force (F5) exerted by the actuator (101) is oriented, and **in that**, according to the frontal direction (152), by considering the projection of the point of application (145) on the spreader (103) of the force (F5) exerted by the actuator (101) as origin, and the direction in which the actuator (101) pulls on the spreader (103) to be a positive direction, the abscissae of the projections of the points of application (147, 148, 149, 150) on the spreader (103) of the forces (F1, F2, F3, F4) exerted by the fingers (14, 15, 16, 17) are all negative.

3. The hand as claimed in claim 2, **characterized in that** it comprises four fingers (14, 15, 16, 17) linked to the spreader (103, 104), of which a first finger forms an index finger (14), a second forms a middle finger (15), a third forms a ring finger (16) and a fourth forms a little finger (17), **in that**, relative to the frontal direction (152) and as an absolute value, the abscissa of the point of application (150) of the force (F4) exerted by the little finger (17) is the smallest, the abscissa of the point of application (148) of the force (F2) exerted by the middle finger (15) is the greatest and the abscissae of the points of application (147, 149) of the forces (F1, F3) exerted by the index finger (14) and the ring finger (16) have intermediate values.

4. The hand as claimed in claim 3, **characterized in that** the four fingers (14, 15, 16, 17) linked to the spreader (103, 104) are identical.

5. The hand as claimed in one of the preceding claims, **characterized in that** there are defined, in a plane called horizontal plane (125) containing a direction in which the force (F5) exerted by the actuator (101) is oriented and in which the palm (11) of the hand (10) mainly extends, the projection of the point of application (145) on the spreader (103) of the force (F5) exerted by the actuator (101) and the projections of the points of application (147, 148, 149, 150) on the spreader (103) of the forces (F1, F2, F3, F4) exerted by the fingers (14, 15, 16, 17), **in that**, according to a direction (162) of the horizontal plane (125) at right angles to the direction in which the force (F5) exerted by the actuator (101) is oriented, the projection of the point of application (145) of the force exerted by the actuator (101) is situated at the barycenter of the projection of the points of application of the forces (F1, F2, F3, F4) exerted by the fingers (14, 15, 16, 17) linked to the spreader (103).

6. The hand as claimed in one of the preceding claims, **characterized in that** the spreader (103, 104) extends mainly in a plane called horizontal plane (125) containing a direction in which the force (F5) exerted by the actuator (101) is oriented and in which the palm (11) of the hand (10) mainly extends.

7. The hand as claimed in one of the preceding claims, **characterized in that** the actuator is a dual-acting actuator (176) and **in that** it comprises a single spreader (103) linked to the dual-acting actuator (176).

8. The hand as claimed in one of claims 1 to 6, **characterized in that** it comprises two spreaders (103, 104) making it possible to motorize each of the fingers (14, 15, 16, 17) by dual action.

9. The hand as claimed in claim 8, **characterized in that** it comprises a dual-acting actuator (170) common to the two spreaders (103, 104).

10. The hand as claimed in claim 9, **characterized in that** the actuator (170) common to the two spreaders (103, 104) acts on the two spreaders (103, 104) via a cable (171) winding on a pulley (172) driven in rotation by the actuator (170) common to the two spreaders (103, 104).

11. The hand as claimed in one of the preceding claims, **characterized in that** it comprises stops (161, 162) limiting the displacement of the spreader (103, 104).

12. The hand as claimed in one of the preceding claims, **characterized in that** it comprises a thumb (13) and **in that** the actuator (170; 176) exerts a force on the thumb (13) independently of the spreader (103, 104).

13. A humanoid robot, **characterized in that** it comprises a hand (10) as claimed in one of the preceding claims.
